# EUROPEAN PATENT APPLICATION

(11) **EP 2 859 798 A1**
(43) Date of publication of application: **15.04.2015**
(21) Application number: 13801258.8
(22) Date of filing: 17.05.2013
(51) Int. Cl.: A23L 1/035, A23L 1/16

(54) **SODIUM STEAROYL LACTYLATE PREPARATION**

(30) Priority: 08.06.2012 JP 2012131271
(71) Applicant: RIKEN VITAMIN CO., LTD., Chiyoda-ku, Tokyo 101-8370 (JP)
(72) Inventor: NAKAMORI, Keisuke, Chiba-shi Chiba 261-0002 (JP); ASOU, Shigeki, Chiba-shi Chiba 261-0002 (JP); TAKAYAMA, Youko, Chiba-shi Chiba 261-0002 (JP); SUGIYAMA, Hiroko, Chiba-shi Chiba 261-0002 (JP)
(74) Representative: Keller, Günter
(86) International application number: PCT/JP2013/063776
(87) International publication number: WO 2013/183422

(57) **Abstract**

Provided is a sodium stearoyl lactylate preparation having high solubility (excellent dispersibility) in water at 20°C and excellent effects of improving the easiness of loosening noodles and improving the texture of noodles. In particular, provided is a sodium stearoyl lactylate preparation of which the dried residue weight measured, by Dispersibility Test 1, as an evaluation index of dispersibility is less than 1.4 g, Dispersibility Test 1 comprising the following steps 1) to 3) :
1) placing 47.5 g of water at 20°C in a 100 mL glass beaker, adding 2.5 g of the sodium stearoyl lactylate preparation at the same temperature thereto, and stirring the content at the same temperature at 500 rpm for 60 seconds using a three-one motor to prepare a mixed liquid;
2) pouring the mixed liquid in 1) into a stainless steel strainer with a pore size of 250 µm and collecting the residue remaining in the strainer; and
3) placing the residue in 2) on a glass petri dish, hot-air drying the residue at 105°C for 2 hours, and measuring the weight (g) of the dry matter (dried residue) remaining on the glass petri dish for evaluation of the dispersibility.

## Description

### Technical Field

The present invention relates to a sodium stearoyl lactylate preparation.

### Background Art

Sodium stearoyl lactylate (hereinafter referred to also as "SSL") is a mixture of sodium salts of stearoyl lactic acid, which is produced by the reaction of stearic acid and lactic acid. SSL is used as an emulsifier in the production of bread, pastries, and the like and is known to have effects of improving the easiness of loosening noodles and improving the texture of noodles.

Various techniques for improving the easiness of loosening noodles and improving other qualities by using SSL have been suggested, including, for example, a rice- and noodle-improving agent comprising sodium stearoyl lactylate and/or a polyoxyethylene (20) sorbitan fatty acid ester (see Patent Literature 1). However, the effects of such techniques are not always satisfactory in practice.

SSL is classified as a hydrophilic emulsifier, but its water solubility is poor at low temperature and thus pre-treatment such as heating of water is required when SSL is used as a dispersion in water. Hence, conventional SSL is not satisfactory in terms of usability.

### Citation List

### Patent Literature

Patent Literature 1: JP 2004-65216 A

### Summary of Invention

### Technical Problem

An object of the present invention is to provide a sodium stearoyl lactylate preparation having high solubility (excellent dispersibility) in unheated water and excellent effects of improving the easiness of loosening noodles and improving the texture of noodles.

### Solution to Problem

In order to solve the above problems, the inventors first developed several types of SSL preparations having increased solubility in water at 20°C. Surprisingly, these preparations were found to have more excellent effects of improving the easiness of loosening noodles and improving the texture of noodles as compared with the case of addition of SSL as it is to noodles. Based on this finding, the inventors completed the present invention.

That is, the sodium stearoyl lactylate preparation of the present invention includes the following (1) and (2). The sodium stearoyl lactylate preparation of the present invention can be produced by any of the following Methods 1 to 5. The sodium stearoyl lactylate preparation of the present invention can be used to improve the quality of noodles. (1) A sodium stearoyl lactylate preparation of which the dried residue weight measured, by Dispersibility Test 1 below, as an evaluation index of dispersibility is less than 1.4 g.

### Dispersibility test 1

1) 47.5 g of water at 20°C is placed in a 100 mL glass beaker (inner diameter: 50 mm; height: 70 mm), 2.5 g of the sodium stearoyl lactylate preparation at the same temperature is added thereto, and the content is stirred at the same temperature at 500 rpm for 60 seconds using a three-one motor (model: FBL-600; made by HEIDON Co., Ltd., equipped with one stirring wing 38 mm in diameter having three blades) to prepare a mixed liquid. The stirring wing that is attached to the three-one motor in Dispersibility test 1 is a stirring wing 38 mm in diameter (trade name: fan), which is one of the stirring wings included in a stirring wing set "Type: FS-7" available as the accessories for the three-one motor.
2) The mixed liquid in 1) is poured into a stainless steel strainer with a pore size of 250 µm and the residue remaining in the strainer is collected.
3) The residue in 2) is placed on a glass petri dish (inner diameter: 70 mm; height: 20 mm), the residue is hot-air dried at 105°C for 2 hours, and the weight (g) of the dry matter (dried residue) remaining on the glass petri dish is measured for evaluation of the dispersibility. A smaller amount of the dried residue means higher dispersibility.

(2) A sodium stearoyl lactylate preparation of which the dried residue weight measured, by Dispersibility Test 2 below, as an evaluation index of dispersibility is less than 0.60 g.

### Dispersibility test 2

1) 247.5 g of water at 20°C is placed in a 300 mL glass beaker (inner diameter: 70 mm; height: 105 mm), 2.5 g of the sodium stearoyl lactylate preparation at the same temperature is added thereto, and the content is stirred at the same temperature at 3, 000 rpm for 60 seconds using a high-speed mixer (model: Homo Mixer MARK II 2.5; made by PRIMIX Corporation) to prepare a mixed liquid.
2) The mixed liquid in 1) is poured into a stainless steel strainer with a pore size of 250 µm and the residue remaining in the strainer is collected.
3) The residue in 2) is placed on a glass petri dish (inner diameter: 70 mm; height: 20 mm), the residue is hot-air dried at 105°C for 2 hours, and the weight (g) of the dry matter (dried residue) remaining on the glass petri dish is measured for evaluation of the dispersibility. A smaller amount of the dried residue means higher dispersibility.

(3) The sodium stearoyl lactylate preparation according to the above (1) or (2) can be produced by any of the following Methods 1 to 5.

### Method 1

A sodium stearoyl lactylate preparation in the form of a powder is produced by drying a liquid composition containing sodium stearoyl lactylate and an excipient into a powder.

### Method 2

A sodium stearoyl lactylate preparation in the form of a powder is produced by cooling and powdering a mixture obtained by melting sodium stearoyl lactylate together with an emulsifier other than sodium stearoyl lactylate.

### Method 3

A sodium stearoyl lactylate preparation in the form of a liquid composition is produced by cooling a mixture obtained by melting sodium stearoyl lactylate under heating together with an emulsifier other than sodium stearoyl lactylate and with an edible fat and oil.

### Method 4

A sodium stearoyl lactylate preparation in the form of a paste composition is produced by cooling a mixture obtained by melting sodium stearoyl lactylate under heating together with an emulsifier other than sodium stearoyl lactylate.

### Method 5

A sodium stearoyl lactylate preparation in the form of a powder with an average particle diameter of 10 to 180 µm is produced by pulverizing sodium stearoyl lactylate.

(4) The sodium stearoyl lactylate preparation of the present invention produced as described above can be used to improve the quality of noodles.

### Advantageous Effects of Invention

The sodium stearoyl lactylate preparation of the present invention has excellent solubility (excellent dispersibility) in unheated water and therefore provides more easiness of loosening noodles and imparts excellent texture to noodles.

### Description of Embodiments

The SSL used in the present invention is not particularly limited as long as it is a known SSL containing, as a major component, a sodium salt having a stearoyl group as a lipophilic group and the carbonium ion of lactic acid as a hydrophilic group. For example, a commercially available SSL is a mixture containing acylated lactic acid and acylated lactoyl lactic acid of which the major acyl group is a stearoyl group (stearoyl lactic acid and the like) and sodium salts thereof, fatty acid of which the major component is stearic acid and sodium salts thereof, and condensed lactic acid and sodium salts thereof, and in the present invention, such SSL can be used.

The SSL preparation of the present invention has increased dispersibility in water at 20°C. In particular, the SSL preparation of the present invention is a SSL preparation of which the dried residue weight measured, by Dispersibility Test 1 described below, as an evaluation index of dispersibility is less than 1.4 g; or a SSL preparation of which the dried residue weight measured, by Dispersibility Test 2 described below, as an evaluation index of dispersibility is less than 0.60 g.

### Dispersibility test 1

1) 47.5 g of water at 20°C is placed in a 100 mL glass beaker (inner diameter: 50 mm; height: 70 mm), 2.5 g of a sodium stearoyl lactylate preparation at the same temperature is added thereto, and the content is stirred at the same temperature at 500 rpm for 60 seconds using a three-one motor (model: FBL-600; made by HEIDON Co., Ltd., equipped with one stirring wing 38 mm in diameter having three blades) to prepare a mixed liquid.
2) The mixed liquid in 1) is poured into a stainless steel strainer with a pore size of 250 µm and the residue remaining in the strainer is collected.
3) The residue in 2) is placed on a glass petri dish (inner diameter: 70 mm; height: 20 mm), the residue is hot-air dried at 105°C for 2 hours, and the weight (g) of the dry matter (dried residue) remaining on the glass petri dish is measured for evaluation of the dispersibility.

### Dispersibility test 2

1) 247.5 g of water at 20°C is placed in a 300 mL glass beaker (inner diameter: 70 mm; height: 105 mm), 2.5 g of a sodium stearoyl lactylate preparation at the same temperature is added thereto, and the content is stirred at the same temperature at 3, 000 rpm for 60 seconds using a high-speed mixer (model: Homo Mixer MARK II 2.5; made by PRIMIX Corporation) to prepare a mixed liquid.
2) The mixed liquid in 1) is poured into a stainless steel strainer with a pore size of 250 µm and the residue remaining in the strainer is collected.
3) The residue in 2) is placed on a glass petri dish (inner diameter: 70 mm; height: 20 mm), the residue is hot-air dried at 105°C for 2 hours, and the weight (g) of the dry matter (dried residue) remaining on the glass petri dish is measured for evaluation of the dispersibility.

The water used in the above Dispersibility tests 1 and 2 is not particularly limited and may be, for example, tap water, ion exchanged water, distilled water, or the like.

There is no limitation on the production method for the SSL preparation of which the dried residue weight measured, by the above Dispersibility Test 1, as an evaluation index of dispersibility is less than 1.4 g, or on the production method for the SSL preparation of which the dried residue weight measured, by the above Dispersibility Test 2, as an evaluation index of dispersibility is less than 0.60 g. These SSL preparations may be produced by, for example, the following Methods 1 to 5.

### Method 1

Method 1 comprises drying a liquid composition containing SSL and an excipient (base material for powder formation) into a powder. A preferred embodiment of the method is outlined by the following steps 1) to 4).
1) About 2 to 30 parts by mass of a modified starch and about 10 to 50 parts by mass of an excipient other than the modified starch are added to 100 parts by mass of water and dissolved therein under heating at about 60 to 90°C to prepare an aqueous solution.
2) About 10 to 100 parts by mass of SSL is melt under heating at about 60 to 80°C to form a molten liquid.
3) The molten liquid in 2) is added to the aqueous solution in 1) and dispersed under stirring with a mixer under heating at about 70 to 90°C to prepare a liquid composition.
4) The liquid composition in 3) is dried to give a SSL preparation in the form of a powder.

In the above step 2), "an emulsifier other than SSL and/or an edible fat and oil" may be used together with SSL.

Examples of the excipient include lactoproteins (for example, acid casein, casein sodium, etc.), vegetable proteins (for example, soybean protein, wheat protein, pea protein, etc.) and decomposed products thereof, sugars, starches, polysaccharide thickeners, gummy matter, etc. Examples of the sugars include glucose, fructose, maltose, lactose, sucrose, dextrin, corn syrup, etc. Examples of the starches include corn starch, potato starch, wheat starch, tapioca starch, modified starches, etc. Examples of the polysaccharide thickeners and the gummy matter include xanthan gum, locust bean gum, tragacanth gum, gum arabic, pectin, soybean polysaccharides, etc. These excipients can be used in a combination of two or more types thereof. Among these, preferred are modified starches and dextrin.

A preferred modified starch may be, for example, an alkenyl succinate starch, which is an ester of a starch and an alkenyl derivative of succinic acid. Examples of the alkenyl succinate starch include octenyl succinate starch, decenyl succinate starch, dodecenyl succinate starch, tetradecenyl succinate starch, hexadecenyl succinate starch, octadecenyl succinate starch, and pregelatinized forms, hydrolyzed forms and other forms thereof. Among these, preferred are pregelatinized octenyl succinate starch and a salt thereof.

The viscosity of alkenyl succinate starches in aqueous solutions varies with the degree of hydrolysis of the starches and the timing of hydrolysis of the starches, i.e., whether the hydrolysis is before or after the esterification reaction. In Method 1, for imparting fluidity to the SSL preparation in the form of a powder, it is preferred to select and use, for example, a combination of (a) an alkenyl succinate starch of which the viscosity in a 15% by mass aqueous solution is at least about 5 mPa·s and less than about 100 mPa·s and (b) an alkenyl succinate starch of which the viscosity in a 15% by mass aqueous solution is within the range of about 100 to 250 mPa·s. A preferred example of the alkenyl succinate starch of (a) is an octenyl succinate starch of which the viscosity in a 15% by mass aqueous solution (hereinafter simply referred to as "viscosity") is at least about 5 mPa·s and less than about 100 mPa·s. Specific examples thereof include commercially available products such as CAPSULE ST (viscosity: 7 mPa·s; made by Nippon Nsc Ltd.), HI-CAP 100 (viscosity: 7 mPa·s; made by Nippon Nsc Ltd.), and PURITY GUM BE (viscosity: 24 mPa·s; made by Nippon Nsc Ltd.). A preferred example of the alkenyl succinate starch of (b) is an octenyl succinate starch of which the viscosity is about 100 to 250 mPa·s. Specific examples thereof include commercially available products such as N-CREAMER 46 (viscosity: 245 mPa·s; made by Nippon Nsc Ltd.).

The above viscosity is measured in accordance with "Method 2 Rotational viscometer method" of "28. Viscosimetry" described in Japan's Specifications and Standards for Food Additives, Eighth Edition.

The ratio (weight ratio) of the above alkenyl succinate starches (a) and (b) to be used is not particularly limited and the ratio of the alkenyl succinate starch (a)/the alkenyl succinate starch (b) may be any ratio within the range of 1/99 to 99/1.

A preferred dextrin is, for example, a dextrin with a DE (dextrose equivalent) value of 10 to 28. Such a dextrin is commercially produced and sold and examples thereof include Pinedex #2 (made by Matsutani Chemical Industry Co., Ltd.; DE value = 11), Pinedex #3 (made by Matsutani Chemical Industry Co., Ltd.; DE value = 25), Pinedex #4 (made by Matsutani Chemical Industry Co., Ltd.; DE value = 19), M.P.D (made by Matsutani Chemical Industry Co., Ltd.; DE value = 25), Sandec #30 (made by Sanwa Starch Co., Ltd.; DE value = 3), Sandec #150 (made by Sanwa Starch Co., Ltd.; DE value = 17) Sandec #300 (made by Sanwa Starch Co., Ltd.; DE value = 28), and the like, and these products can be used in the present invention.

In cases where an emulsifier other than SSL is used together with SSL in the above step 2), the type of emulsifier other than SSL is not particularly limited and examples thereof include glycerol fatty acid esters, sucrose fatty acid esters, sorbitan fatty acid esters, polyoxyethylene sorbitan fatty acid esters, propylene glycol fatty acid esters, lecithin, etc. The glycerol fatty acid esters herein include, in addition to esters of glycerol and fatty acids, glycerol organic acid fatty acid esters, polyglycerol fatty acid esters, etc. The glycerol organic acid fatty acid esters include glycerol acetic acid fatty acid esters, glycerol lactic acid fatty acid esters, glycerol citric acid fatty acid esters, glycerol succinic acid fatty acid esters, glycerol diacetyltartaric acid fatty acid esters, etc.

In cases where an edible fat and oil is used together with SSL in the above step 2), the type of edible fat and oil is not particularly limited and examples thereof include animal and vegetable fats and oils suitable for eating, and hydrogenated products, transesterified products, and fractionated products thereof, etc. Examples of the vegetable fats and oils include safflower oil, soybean oil, cottonseed oil, rice bran oil, rapeseed oil, olive oil, palm oil, coconut oil, etc. The fat and oil may be one type or a combination of two or more types.

A preferred mixer to be used in the above step 3) is, for example, a high speed rotating disperser and emulsifier, such as T.K. Homo Mixer (made by PRIMIX Corporation) and CLEARMIX (made by M Technique Co., Ltd.), or a homogenizer and wet-type pulverizer, such as Homogenizer (made by IZUMI FOOD MACHINERY Co., Ltd.). The operating conditions of the high speed rotating disperser and emulsifier are, for example, in the case of use of a small type for laboratories, a rotational speed of about 2,000 to 20,000 rpm and a mixing time of about 1 to 30 minutes.

The drying method of the liquid composition in the step 4) is, for example, spray drying, drum drying, belt drying, vacuum drying, vacuum freeze-drying, or the like. Among these, preferred is spray drying, which allows simultaneous drying and powder formation.

The device for spray drying is not particularly limited and a known device such as an injection-type spray dryer and a rotary disk-type spray dryer can be used. Spray drying operation can be performed by, for example, feeding a dispersion to a pressure nozzle-type spray dryer, spray drying the dispersion under the conditions of an inlet hot air temperature of about 120 to 200°C, preferably about 140 to 190°C, and an exhaust temperature of about 60 to 140°C, preferably about 70 to 90°C, and collecting dry matter with a cyclone to give a SSL preparation in the form of a powder.

The amount of each component relative to 100% by mass of the SSL preparation produced by Method 1 is not particularly limited, but preferably the amount of each component is adjusted so that, for example, the amount of SSL is about 10 to 60% by mass, preferably about 25 to 55% by mass, the amount of the modified starch is about 3 to 30% by mass, preferably about 5 to 15% by mass, and the amount of the excipient other than the modified starch is about 5 to 60% by mass, preferably about 25 to 50% by mass.

In cases where "an emulsifier other than SSL and/or an edible fat and oil is used together with SSL" in the above step 2), the amounts of the emulsifier other than SSL and the edible fat and oil relative to 100% by mass of the SSL preparation are not particularly limited, but preferably the amounts are adjusted so that, for example, the amount of the emulsifier other than SSL is about 1 to 30% by mass, preferably about 1 to 15% by mass, and the amount of the edible fat and oil is about 1 to 30% by mass, preferably about 1 to 15% by mass.

### Method 2

Method 2 comprises cooling and powdering a mixture obtained by melting SSL together with an emulsifier other than SSL. Examples of this method include
(a) a method in which SSL is heated together with an emulsifier other than SSL at the melting point or higher (for example, 60 to 90°C) so that they are melted and mixed, the mixture is spray-cooled at -196 to 15°C, preferably -196 to 0°C, further more preferably -196 to -20°C, and the resulting powder is collected as a SSL preparation in the form of a powder; and (b) a method in which SSL is heated together with an emulsifier other than SSL at the melting point or higher so that they are melted and mixed, the mixture is cooled and solidified at -196 to 15°C for 1 to 72 hours, and the solidified mixture is pulverized by a known method to give a SSL preparation in the form of a powder.

Examples of the emulsifier other than SSL include glycerol fatty acid esters, sucrose fatty acid esters, sorbitan fatty acid esters, polyoxyethylene sorbitan fatty acid esters, propylene glycol fatty acid esters, lecithin, etc. The glycerol fatty acid esters herein include, in addition to esters of glycerol and fatty acids, glycerol organic acid fatty acid esters, polyglycerol fatty acid esters, etc. The glycerol organic acid fatty acid esters include glycerol acetic acid fatty acid esters, glycerol lactic acid fatty acid esters, glycerol citric acid fatty acid esters, glycerol succinic acid fatty acid esters, glycerol diacetyltartaric acid fatty acid esters, etc. These emulsifiers can be used alone or in a combination of two or more types thereof. For better dispersibility of the SSL preparation in water, the emulsifier other than SSL preferably has an HLB value of 5 or more, more preferably has an HLB value of 6 to 18.

The ratio of SSL to the emulsifier other than SSL (SSL/emulsifier other than SSL) in the mixture obtained by melting SSL together with the emulsifier other than SSL varies with the type of emulsifier and other factors, but preferably the ratio in mass is, for example, 99/1 to 70/30, more preferably 99/1 to 90/10.

The pulverization may be performed by any physical method for pulverization into a fine powder, and examples of such a method include a known pulverization method using a compression crusher, a primary shear crusher, an impact crusher, a roll mill, a high speed tumbling mill, a jet mill, or the like. The degree of pulverization is not particularly limited but preferably pulverization is performed so that the resulting powder has an average particle diameter within the range of, for example, 250 to 500 µm.

### Method 3

Method 3 is for the preparation of a liquid composition and comprises cooling a mixture obtained by melting sodium stearoyl lactylate under heating together with an emulsifier other than sodium stearoyl lactylate and with an edible fat and oil. For example, a SSL preparation in the form of a liquid composition can be easily produced by adding an emulsifier other than SSL and an edible fat and oil to SSL, melting and mixing them under heating at about 60 to 120°C, and cooling the mixture.

Examples of the emulsifier other than SSL include glycerol fatty acid esters, sucrose fatty acid esters, sorbitan fatty acid esters, polyoxyethylene sorbitan fatty acid esters, propylene glycol fatty acid esters, lecithin, etc. The glycerol fatty acid esters herein include, in addition to esters of glycerol and fatty acids, glycerol organic acid fatty acid esters, polyglycerol fatty acid esters, etc. The glycerol organic acid fatty acid esters include glycerol acetic acid fatty acid esters, glycerol lactic acid fatty acid esters, glycerol citric acid fatty acid esters, glycerol succinic acid fatty acid esters, glycerol diacetyltartaric acid fatty acid esters, etc. These emulsifiers can be used alone or in a combination of two or more types thereof. For better dispersibility of the SSL preparation in water, the emulsifier other than SSL preferably has an HLB value of 5 or more, more preferably has an HLB value of 6 to 10.

Examples of the edible fat and oil include animal and vegetable fats and oils suitable for eating, and transesterified products and fractionated products thereof, and the like. Preferred is an edible fat and oil in a liquid form at normal temperature (15 to 25°C). Examples of such an edible fat and oil include safflower oil, soybean oil, cottonseed oil, rice bran oil, rapeseed oil (including refined rapeseed oil), olive oil, etc. The edible fat and oil may be one type or a combination of two or more types.

The amounts of SSL, the emulsifier other than SSL and the edible fat and oil relative to 100% by mass of the SSL preparation are not particularly limited, but preferably the amounts are adjusted so that, for example, the amount of SSL is about 5 to 70% by mass, preferably about 15 to 60% by mass, the amount of the emulsifier other than SSL is about 1 to 50% by mass, preferably about 1 to 15% by mass, and the amount of the edible fat and oil is about 20 to 90% by mass, preferably about 30 to 80% by mass.

### Method 4

Method 4 is for the preparation of a paste composition and comprises cooling a mixture obtained by melting sodium stearoyl lactylate under heating together with an emulsifier other than sodium stearoyl lactylate. For example, a SSL preparation in the form of a paste composition can be easily produced by adding an emulsifier other than SSL to SSL, melting and mixing them under heating at about 60 to 120°C, and cooling the mixture.

Examples of the emulsifier other than SSL include glycerol fatty acid esters, sucrose fatty acid esters, sorbitan fatty acid esters, polyoxyethylene sorbitan fatty acid esters, propylene glycol fatty acid esters, lecithin, etc. The glycerol fatty acid esters herein include, in addition to esters of glycerol and fatty acids, glycerol organic acid fatty acid esters, polyglycerol fatty acid esters, etc. The glycerol organic acid fatty acid esters include glycerol acetic acid fatty acid esters, glycerol lactic acid fatty acid esters, glycerol citric acid fatty acid esters, glycerol succinic acid fatty acid esters, glycerol diacetyltartaric acid fatty acid esters, etc. Preferably, these emulsifiers can be used in a combination of two or more types thereof, and especially preferred is a combination of a diglycerol fatty acid ester and a glycerol acetic acid fatty acid ester. For better dispersibility of the SSL preparation in water, the emulsifier other than SSL preferably has an HLB value of 5 or more, more preferably has an HLB value of 6 to 10.

The amounts of SSL and the emulsifier other than SSL relative to 100% by mass of the SSL preparation are not particularly limited, but in cases where a diglycerol fatty acid ester and a glycerol acetic acid fatty acid ester are used as the emulsifiers other than SSL, the amounts of SSL and the emulsifiers are preferably adjusted so that, for example, the amount of SSL is about 5 to 70% by mass, preferably about 15 to 60% by mass, the amount of the diglycerol fatty acid ester is about 1 to 50% by mass, preferably about 1 to 15% by mass, and the amount of the glycerol acetic acid fatty acid ester is about 20 to 90% by mass, preferably about 30 to 80% by mass.

### Method 5

Method 5 is for the preparation of a SSL preparation in the form of a powder with an average particle diameter of 10 to 180 µm, preferably 20 to 170 µm, and comprises pulverizing SSL.

The pulverization may be performed by any physical method as long as it allows a solid SSL having an average particle diameter of above 180 µm to be pulverized into a fine powder having an average particle diameter of 10 to 180 µm, and examples of such a method include a known pulverization method using a compression crusher, a primary shear crusher, an impact crusher, a roll mill, a high speed tumbling mill, a jet mill, or the like. Preferably, after pulverization, the obtained powder is sieved so that the maximum particle diameter is 100 to 250 µm.

The SSL preparation of the present invention may further comprise another component as needed unless the objects of the present invention are hindered. Examples of such a component include antioxidants, seasonings, spices, thickeners, stabilizers, pH adjusters (for example, citric acid, acetic acid, lactic acid, succinic acid, malic acid, phosphoric acid, salts thereof, etc.), etc.

The food for which the SSL preparation of the present invention is to be used and the purpose of the use of the SSL preparation of the present invention are not particularly limited, but preferably the SSL preparation is used to improve the quality of noodles (i.e., used as an agent for improving the quality of noodles), for example, to improve the easiness of loosening noodles and to improve the texture and the like of noodles, which are processed products made from grain powders such as wheat flour and buckwheat flour. Examples of the types of noodles include fresh noodles, cooked noodles, dried noodles, instant noodles, macaronies, dumpling wrappers, shaomai wrappers, spring roll wrappers, etc. Examples of the cooked noodles include boiled noodles (for example, boiled udon noodles, boiled Chinese noodles, etc.), steamed noodles, and frozen products and LL (Long Life) products thereof, and the like. Among these, the present invention is effectively applied to boiled noodles, steamed noodles, and the like, which often have problems with loosening.

The method for using the SSL preparation of the present invention for noodles is not particularly limited, and examples thereof include
(a) a method in which the SSL preparation is added to and mixed with a raw material powder before kneading of noodle dough;
(b) a method in which a dispersion of the SSL preparation in water is used as water for kneading noodle dough;
(c) a method in which a dispersion of the SSL preparation in water is sprayed on or applied to boiled noodles or steamed noodles; and
(d) a method in which boiled noodles or steamed noodles are immersed in a dispersion of the SSL preparation in water.

The amount of the SSL preparation to be used for noodles is not particularly limited, and the SSL preparation may be used in an amount of, for example, usually about 0.1 to 10 parts by mass, preferably about 0.3 to 5 parts by mass, relative to 100 parts by mass of a grain powder such as wheat flour.

### Examples

The present invention will be more specifically illustrated based on Examples below, but is not limited to these Examples. Various modifications and alterations are possible without departing from the technical scope of the present invention.

### Example 1 (Production Example 1 of sodium stearoyl lactylate preparation in the form of powder by Method 1)

Water in an amount of 600 g was placed in a 1 L beaker, and 20 g of octenyl succinate starch (trade name: PURITY GUM BE; made by Nippon Nsc Ltd.), 20 g of another octenyl succinate starch (trade name: N-CREAMER 46; made by Nippon Nsc Ltd.) and 140 g of dextrin (trade name: Pinedex #2; DE value = 11; made by Matsutani Chemical Industry Co., Ltd.) were added to the water and dissolved therein under heating at 80°C to prepare an aqueous solution.

Next, 220 g of SSL (trade name: Poem SSL-100; made by Riken Vitamin Co., Ltd.) was placed in a 500 mL beaker and melted under heating at 80°C to form a molten liquid. The molten liquid was added to the above aqueous solution in the 1 L beaker. The mixture was stirred with a mixer (trade name: T.K. Homo Mixer; made by PRIMIX Corporation) at 10,000 rpm under heating at 80°C for 10 minutes to prepare 1,000 g of a liquid composition.

The liquid composition was then spray-dried with a spray dryer (trade name: Spray Dryer L-8i; made by Ohkawara Kakohki Co., Ltd.) at an inlet hot air temperature of 175°C and an exhaust temperature of 80°C to give 300 g of a SSL preparation in the form of a powder (Example product 1).

### Example 2 (Production Example 2 of sodium stearoyl lactylate preparation in the form of powder by Method 1)

A SSL preparation in the form of a powder (Example product 2) was obtained in an amount of 300 g in the same manner as in Example 1, except that the amount of the SSL (trade name: Poem SSL-100; made by Riken Vitamin Co., Ltd.) was changed from 220 g to 160 g , and that 20 g of palm oil (trade name: RPO; made by Ueda Oils & Fats Mfg. Co., Ltd.) and 40 g of a glycerol succinic acid fatty acid ester (trade name: Poem B-10; made by Riken Vitamin Co., Ltd.) were used.

### Example 3 (Production Example 1 of sodium stearoyl lactylate preparation in the form of powder by Method 2)

SSL (trade name: Poem SSL-100; made by Riken Vitamin Co., Ltd.) in an amount of 95 g was placed in a 200 mL beaker, 5 g of a diglycerol fatty acid ester (trade name: Poem DO-100V; HLB value = 8.0; made by Riken Vitamin Co., Ltd.) was added thereto, and the content was melted under heating at 80°C to prepare a mixture.

The mixture was then left to stand in a refrigerator at 4°C for 8 hours to allow it to cool and solidify. The solidified mixture was pulverized with a food mill (trade name: Millser 800DG; made by Iwatani Corporation) for 20 seconds to give 80 g of a SSL preparation in the form of a powder (Example product 3). The average particle diameter of the obtained SSL preparation was determined to be 371 µm by measurement using a laser diffraction particle size distribution analyzer (model: Mastersizer; made by Malvern Ltd.).

### Example 4 (Production Example 2 of sodium stearoyl lactylate preparation in the form of powder by Method 2)

A SSL preparation in the form of a powder (Example product 4) was obtained in an amount of 80 g in the same manner as in Example 3, except that 5 g of a glycerol diacetyltartaric acid fatty acid ester (trade name: Poem W-70; HLB value = 9.5; made by Riken Vitamin Co., Ltd.) was used instead of 5 g of the diglycerol fatty acid ester. The average particle diameter of the obtained SSL preparation was determined to be 353 µm by measurement using a laser diffraction particle size distribution analyzer (model: Mastersizer; made by Malvern Ltd.).

### Example 5 (Production Example 3 of sodium stearoyl lactylate preparation in the form of powder by Method 2)

A SSL preparation in the form of a powder (Example product 5) was obtained in an amount of 80 g in the same manner as in Example 3, except that the amount of the SSL was changed from 95 g to 70 g, and that 30 g of a glycerol diacetyltartaric acid fatty acid ester (trade name: Poem W-70; HLB value = 9.5; made by Riken Vitamin Co., Ltd.) was used instead of 5 g of the diglycerol fatty acid ester. The average particle diameter of the obtained SSL preparation was determined to be 311 µm by measurement using a laser diffraction particle size distribution analyzer (model: Mastersizer; made by Malvern Ltd.).

### Example 6 (Production Example 1 of sodium stearoyl lactylate preparation in the form of liquid composition by Method 3)

SSL (trade name: Poem SSL-100; made by Riken Vitamin Co., Ltd.) in an amount of 40 g was placed in a 200 mL beaker. To this were added 10 g of a diglycerol fatty acid ester (trade name: Poem DO-100V; HLB value = 8.0; made by Riken Vitamin Co., Ltd.) and 50 g of refined rapeseed oil (trade name: Refined rapeseed oil; made by Boso oil and fat Co. , Ltd.) and the content was melted and mixed under heating at 80°C to prepare a liquid composition.

The liquid composition was then left to stand at room temperature for 8 hours to allow it to cool to give 100 g of a SSL preparation in the form of a liquid composition (Example product 6).

### Example 7 (Production Example 1 of sodium stearoyl lactylate preparation in the form of paste composition by Method 4)

SSL (trade name: Poem SSL-100; made by Riken Vitamin Co., Ltd.) in an amount of 40 g was placed in a 200 mL beaker. To this were added 10 g of a diglycerol fatty acid ester (trade name: Poem DO-100V; HLB value = 8.0; made by Riken Vitamin Co. , Ltd.) and 50 g of a glycerol acetic acid fatty acid ester (trade name: Poem G-002; made by Riken Vitamin Co., Ltd.) and the content was melted and mixed under heating at 80°C to prepare a liquid composition.

The obtained composition was left to stand at room temperature for 8 hours to allow it to cool to give 100 g of a SSL preparation in the form of a paste composition (Example product 7).

### Example 8 (Production Example 1 of sodium stearoyl lactylate preparation in the form of powder by Method 5)

SSL (trade name: Poem SSL-100; a powder with an average particle diameter of 217 µm; made by Riken Vitamin Co., Ltd.) in an amount of 200 g was pulverized with a food mill (trade name: Millser 800DG; made by Iwatani Corporation) for 60 seconds. The pulverized product was sieved through a strainer with a pore size of 100 µm to give 50 g of a SSL preparation in the form of a powder of which the maximum particle diameter was adjusted to be 100 µm or less (Example product 8). The average particle diameter of the obtained SSL preparation was determined to be 44 µm by measurement using a laser diffraction particle size distribution analyzer (model: Mastersizer; made by Malvern Ltd.).

### Example 9 (Production Example 2 of sodium stearoyl lactylate preparation in the form of powder by Method 5)

SSL (trade name: Poem SSL-100; a powder with an average particle diameter of 217 µm; made by Riken Vitamin Co., Ltd.) in an amount of 200 g was pulverized with a food mill (trade name: Millser 800DG; made by Iwatani Corporation) for 30 seconds. The pulverized product was sieved through a strainer with a pore size of 250 µm to give 50 g of a SSL preparation in the form of a powder of which the maximum particle diameter was adjusted to be 250 µm or less (Example product 9). The average particle diameter of the obtained SSL preparation was determined to be 152 µm by measurement using a laser diffraction particle size distribution analyzer (model: Mastersizer; made by Malvern Ltd.).

### Example 10 (Production Example 4 of sodium stearoyl lactylate preparation in the form of powder by Method 2)

A SSL preparation in the form of a powder (Example product 10) was obtained in an amount of 80 g in the same manner as in Example 3, except that the amount of the SSL was changed from 95 g to 99 g and that the amount of the diglycerol fatty acid ester was changed from 5 g to 1 g. The average particle diameter of the obtained SSL preparation was determined to be 364 µm by measurement using a laser diffraction particle size distribution analyzer (model: Mastersizer; made by Malvern Ltd.).

### Example 11 (Production Example 2 of sodium stearoyl lactylate preparation in the form of liquid composition by Method 3)

A SSL preparation in the form of a liquid composition (Example product 11) was obtained in an amount of 100 g in the same manner as in Example 6, except that the amount of the SSL was changed from 40 g to 50 g, that the amount of the diglycerol fatty acid ester was changed from 10 g to 1 g, and that the amount of the refined rapeseed oil was changed from 50 g to 49 g.

### Comparative Example 1

A SSL preparation (Comparative Example 1) was obtained in an amount of 80 g in the same manner as in Example 3, except that 5 g of the diglycerol fatty acid ester (trade name: Poem DO-100V; HLB value = 8.0; made by Riken Vitamin Co., Ltd.) was not used.

### Comparative Example 2

A SSL preparation (Comparative Example 2) was obtained in an amount of 90 g in the same manner as in Example 6, except that 10 g of the diglycerol fatty acid ester (trade name: Poem DO-100V; HLB value = 8.0; made by Riken Vitamin Co., Ltd.) was not used.

### Test Example 1

### Evaluation of dispersibility in water at 20°C

The dispersibility in water at 20°C was evaluated on the SSL preparations produced in Examples 1 to 11 and Comparative Examples 1 and 2 described above (Example products 1 to 11 and Comparative products 1 and 2) by measuring the weight of the dried residue in the following Dispersibility tests 1 and 2. As a control, the dispersibility was evaluated in the same manner as above on a commercially available SSL (Commercially available product A; trade name: Poem SSL-100; a powder with an average particle diameter of 217 µm; made by Riken Vitamin Co., Ltd.). The results are shown in Table 1.

### Dispersibility test 1

1) 47.5 g of water at 20°C is placed in a 100 mL glass beaker (inner diameter: 50 mm; height: 70 mm), 2.5 g of the sodium stearoyl lactylate preparation (any of Example products 1 to 11, Comparative products 1 and 2 and the commercially available product) at the same temperature is added thereto, and the content is stirred at the same temperature at 500 rpm for 60 seconds using a three-one motor (model: FBL-600; made by HEIDON Co., Ltd., equipped with one stirring wing 38 mm in diameter having three blades) to prepare a mixed liquid.
2) The mixed liquid in 1) is poured into a stainless steel strainer with a pore size of 250 µm and the residue remaining in the strainer is collected.
3) The residue in 2) is placed on a glass petri dish (inner diameter: 70 mm; height: 20 mm), the residue is hot-air dried at 105°C for 2 hours, and the weight (g) of the dry matter (dried residue) remaining on the glass petri dish is measured for evaluation of the dispersibility.

### Dispersibility test 2

1) 247.5 g of water at 20°C is placed in a 300 mL glass beaker (inner diameter: 70 mm; height: 105 mm), 2.5 g of the sodium stearoyl lactylate preparation (any of Example products 1 to 11, Comparative products 1 and 2 and the commercially available product) at the same temperature is added thereto, and the content is stirred at the same temperature at 3,000 rpm for 60 seconds using a high-speed mixer (model: Homo Mixer MARK II 2 . 5; made by PRIMIX Corporation) to prepare a mixed liquid.
2) The mixed liquid in 1) is poured into a stainless steel strainer with a pore size of 250 µm and the residue remaining in the strainer is collected.
3) The residue in 2) is placed on a glass petri dish (inner diameter: 70 mm; height: 20 mm), the residue is hot-air dried at 105°C for 2 hours, and the weight (g) of the dry matter (dried residue) remaining on the glass petri dish is measured for evaluation of the dispersibility.

**Table 1**

| | Dispersibility (dried residue (g)) | |
|---|---|---|
| | Dispersibility test 1 | Dispersibility test 2 |
| Example product 1 | 0.2 | 0.04 |
| Example product 2 | 0.4 | 0.05 |
| Example product 3 | 0.5 | 0.42 |
| Example product 4 | 0.2 | 0.34 |
| Example product 5 | 0.7 | 0.39 |
| Example product 6 | 0.1 | 0.02 |
| Example product 7 | 0.2 | 0.03 |
| Example product 8 | 0.5 | 0.14 |
| Example product 9 | 0.7 | 0.34 |
| Example product 10 | 1.3 | 0.59 |
| Example product 11 | 1.1 | 0.05 |
| Comparative product 1 | 2.3 | 1.18 |
| Comparative product 2 | 1.5 | 0.62 |
| Commercially available product A | 2.3 | 1.51 |

### Test Example 2

### Preparation and evaluation of boiled udon noodles

Boiled udon noodles were prepared using the SSL preparations (Example products 1 to 11 and Comparative products 1 and 2) and the easiness of loosening the noodles and the texture of the noodles were evaluated.

### (1) Preparation of boiled udon noodles

In a horizontal type vacuum test mixer (trade name: 1.0 kg Vacuum HI-LO Kneader; made by Ohtake Noodle Machine MFG. Co., Ltd.) were placed 70 g of wheat flour (trade name: Kin Suzuran; made by Nisshin Seifun Group Inc.), 30 g of starch (trade name: Asagao; made by Matsutani Chemical Industry Co., Ltd.), 3 g of gluten (trade name: Emasoft M-1000; made by Riken Vitamin Co., Ltd.), and 0.6 g of the SSL preparation (any of Example products 1 to 11 and Comparative products 1 and 2). The content was stirred at a rotational speed of 120 rpm for 1 minute. An aqueous solution prepared by dissolving 3 g of sodium chloride in 41 g of water (solution temperature: about 25°C) was added to the mixture, and the mixture was stirred (kneaded) for 2 minutes and further stirred (kneaded) at a rotational speed of 90 rpm under vacuum pressure (-70 cmHg) for 8 minutes to prepare a dough. The obtained dough was then formed into a sheet about 2.5 mm thick using a rolling mill. The obtained sheet-shaped dough was cut into strands of noodle about 3 mm in width using a cutting machine (with use of a cutter No. 10), and the strands of noodle were cut in a length of 25 cm to give fresh udon noodles. The fresh udon noodles were boiled in boiling water for 8 minutes, washed with tap water and immersed in water at about 5°C for 30 seconds. Thus, boiled udon noodles 1 to 13 were prepared.

As controls, boiled udon noodle 14 was prepared in the same manner as above, except that 0.6 g of a commercially available SSL (Commercially available product A; trade name: Poem SSL-100; a powder with an average particle diameter of 217 µm; made by Riken Vitamin Co., Ltd.) was used instead of 0.6 g of the above SSL preparation, and boiled udon noodle 15 was prepared in the same manner as above except that no SSL was used.

### (2) Evaluation of easiness of loosening

Each of the boiled udon noodles 1 to 15 prepared in (1) in an amount of 150 g was separately placed in a hemispherical polystyrene container and the container was sealed and stored at 5°C for 24 hours. After the storage, a noodle soup base (trade name: Hontsuyu; made by KIKKOMAN Corporation) at about 10°C was diluted 3-fold in water at the same temperature and 40 mL of the prepared noodle soup was poured into the container. The boiled udon noodles were loosened with chopsticks and the time required for the strands of the noodle to be detached from each other was measured. This measurement was performed by ten panelists and the average was calculated to determine the time required for loosening. A shorter time required for loosening indicates more easiness of loosening the noodles.

### (3) Evaluation of texture

Sensory analysis of texture was performed on the boiled udon noodles 1 to 15 that were used for the evaluation of the easiness of loosening in the above (2). In the sensory analysis, ten panelists evaluated the noodles in accordance with the evaluation criteria shown in Table 2 below. The average of the scores was calculated and the results were denoted as follows.
Excellent: the average was 3.5 or more
Good: the average was at least 2.5 and less than 3.5
Fair: the average was at least 1.5 and less than 2.5
Poor: the average was less than 1.5

**Table 2**

| | Score |
|---|---|
| Noodles had high firmness when bitten: excellent | 4 |
| Noodles had some firmness when bitten: good | 3 |
| Noodles had little firmness when bitten: poor | 2 |
| Noodles had no firmness when bitten: very poor | 1 |

### (4) Results

Table 3 shows the results of (2) Evaluation of easiness of loosening and (3) Evaluation of texture.

**Table 3**

| Boiled udon noodles | SSL preparation | Time required for loosening (sec) | Texture |
|---|---|---|---|
| 1 | Example product 1 | 31 | Excellent |
| 2 | Example product 2 | 30 | Excellent |
| 3 | Example product 3 | 23 | Good |
| 4 | Example product 4 | 31 | Excellent |
| 5 | Example product 5 | 30 | Excellent |
| 6 | Example product 6 | 28 | Good |
| 7 | Example product 7 | 26 | Good |
| 8 | Example product 8 | 21 | Good |
| 9 | Example product 9 | 24 | Good |
| 10 | Example product 10 | 24 | Good |
| 11 | Example product 11 | 26 | Good |
| 12 | Comparative product 1 | 47 | Poor |
| 13 | Comparative product 2 | 58 | Fair |
| 14 | Commercially available product A | 45 | Poor |
| 15 | Without SSL | 70 | Excellent |

As apparent from Table 3, the boiled udon noodles 1 to 11 prepared using the SSL preparations of Examples (Example products 1 to 11) showed more easiness of loosening and more excellent texture, as compared with the other boiled udon noodles 12 to 15.

## Claims

1. A sodium stearoyl lactylate preparation of which the dried residue weight measured, by Dispersibility Test 1, as an evaluation index of dispersibility is less than 1.4 g, Dispersibility Test 1 comprising the following steps 1) to 3) :
1) placing 47.5 g of water at 20°C in a 100 mL glass beaker (inner diameter: 50 mm; height: 70 mm), adding 2.5 g of the sodium stearoyl lactylate preparation at the same temperature thereto, and stirring the content at the same temperature at 500 rpm for 60 seconds using a three-one motor (model: FBL-600; made by HEIDON Co., Ltd., equipped with one stirring wing 38 mm in diameter having three blades) to prepare a mixed liquid;
2) pouring the mixed liquid in 1) into a stainless steel strainer with a pore size of 250 µm and collecting the residue remaining in the strainer; and
3) placing the residue in 2) on a glass petri dish (inner diameter:70 mm; height: 20 mm), hot-air drying the residue at 105°C for 2 hours, and measuring the weight (g) of the dry matter (dried residue) remaining on the glass petri dish for evaluation of the dispersibility.

2. A sodium stearoyl lactylate preparation of which the dried residue weight measured, by Dispersibility Test 2, as an evaluation index of dispersibility is less than 0.60 g, Dispersibility Test 2 comprising the following steps 1) to 3) :
1) placing 247.5 g of water at 20°C in a 300 mL glass beaker (inner diameter: 70 mm; height: 105 mm), adding 2.5 g of the sodium stearoyl lactylate preparation at the same temperature thereto, and stirring the content at the same temperature at 3, 000 rpm for 60 seconds using a high-speed mixer (model: Homo Mixer MARK II 2.5; made by PRIMIX Corporation) to prepare a mixed liquid;
2) pouring the mixed liquid in 1) into a stainless steel strainer with a pore size of 250 µm and collecting the residue remaining in the strainer; and
3) placing the residue in 2) on a glass petri dish (inner diameter:70 mm; height: 20 mm), hot-air drying the residue at 105°C for 2 hours, and measuring the weight (g) of the dry matter (dried residue) remaining on the glass petri dish for evaluation of the dispersibility.

3. The sodium stearoyl lactylate preparation according to claim 1 or 2, which is produced by drying a liquid composition containing sodium stearoyl lactylate and an excipient into a powder.

4. The sodium stearoyl lactylate preparation according to claim 1 or 2, which is produced by cooling and powdering a mixture obtained by melting sodium stearoyl lactylate together with an emulsifier other than sodium stearoyl lactylate.

5. The sodium stearoyl lactylate preparation according to claim 1 or 2, which is a liquid composition produced by cooling a mixture obtained by melting sodium stearoyl lactylate under heating together with an emulsifier other than sodium stearoyl lactylate and with an edible fat and oil.

6. The sodium stearoyl lactylate preparation according to claim 1 or 2, which is a paste composition produced by cooling a mixture obtained by melting sodium stearoyl lactylate under heating together with an emulsifier other than sodium stearoyl lactylate.

7. The sodium stearoyl lactylate preparation according to claim 1 or 2, which is a powder with an average particle diameter of 10 to 180 µm produced by pulverizing sodium stearoyl lactylate.

8. The sodium stearoyl lactylate preparation according to any of claims 1 to 7, which is used to improve the quality of noodles.
